# EUROPEAN PATENT APPLICATION

(11) **EP 4 198 341 A1**
(43) Date of publication of application: **21.06.2023**
(21) Application number: 22213110.4
(22) Date of filing: 13.12.2022
(51) Int. Cl.: F16H 1/32

(54) **ECCENTRIC OSCILLATION GEAR DEVICE, ROBOT, AND INDUSTRIAL MACHINE**

(30) Priority: 15.12.2021 JP 2021203535; 08.12.2022 JP 2022196328
(71) Applicant: Nabtesco Corporation, Tokyo 102-0093 (JP)
(72) Inventor: Hagane, Mamoru, Chiyoda-ku, Tokyo (JP); Makizoe, Yoshiaki, Chiyoda-ku, Tokyo (JP); Kumagai, Takahide, Chiyoda-ku, Tokyo (JP); Nakashima, Yusuke, Chiyoda-ku, Tokyo (JP)
(74) Representative: Grünecker Patent- und Rechtsanwälte PartG mbB

(57) **Abstract**

An eccentric oscillation gear device (1) according to the invention includes: a casing (2); a first member (41) supported by the casing (2) via a first bearing (6A); a second member (42) supported by the casing (2) via a second bearing (6B); and a fastening portion (100) fastening the first member (41) and the second member (42) to each other in an axial direction of the casing (2). The fastening portion (100) includes an externally threaded portion (103) and an internally threaded portion (200). At least one selected from the group consisting of feet of threads (110) of the externally threaded portion (103) and roots (210b) of threads (210) of the internally threaded portion (200) has elasticity portions (120, 220) for facilitating elastic deformation of the threads (110, 210) associated with the elasticity portions (120, 220) when the externally threaded portion (103) and the internally threaded portion (200) are tightened to each other.

## Description

### TECHNICAL FIELD

The present disclosure relates to an eccentric oscillation gear device, a robot, and an industrial machine.

### BACKGROUND

As an example of eccentric oscillation gear devices, there have been known a transmission (speed reducer) provided on industrial or other robots. Such an eccentric oscillation gear device includes a carrier for relative rotation, as disclosed in, e.g., Patent Literature 1. The carrier is composed of a hold and a shaft portion. The hold and the shaft portion are fastened together with a plurality of fasteners (bolts). The plurality of bolts are arranged around the axis of the carrier. The hold and the shaft portion, which are fastened together with the plurality of bolts, rotate relative to a casing.

### RELEVANT REFERENCES

### LIST OF RELEVANT PATENT LITERATURE

Patent Literature 1: Japanese Patent Application Publication No. 2016-109264

### SUMMARY

However, in the conventional art, the frictional forces on the fastening surfaces between the hold and the shaft portion could vary in the plurality of fasteners that fasten the hold and the shaft portion together. The variation of frictional forces causes instability of the axial tensions between the hold and the shaft portion. As a result, the main bearing could not be preloaded evenly.

One object of the invention is to provide an eccentric oscillation gear device, a robot, and an industrial machine capable of stabilizing the axial tensions and improving the stability of fastening, as well as improving the stability of rotation.
(1) An eccentric oscillation gear device according to one aspect of the invention includes: a casing; a first member supported by the casing via a first bearing; a second member supported by the casing via a second bearing; and a fastening portion fastening the first member and the second member to each other in an axial direction of the casing. The fastening portion includes an externally threaded portion and an internally threaded portion, wherein at least one selected from the group consisting of feet of threads of the externally threaded portion and roots of threads of the internally threaded portion has elasticity portions for facilitating elastic deformation of the threads associated with the elasticity portions when the externally threaded portion and the internally threaded portion are tightened to each other.
   This configuration increases the contact area between the threads of the externally threaded portion and the threads of the internally threaded portion in the fastening portion because of the elastic deformation of the threads caused by the elasticity portions during tightening. Therefore, the variation of the tightening force can be reduced, and the axial tension between the first member and the second member can be stabilized. Thus, the same tightening torque can be applied to a plurality of fastening portions, and the variation of axial tensions can be reduced. This allows the upper limit of the variation of the axial tensions to be maintained below the bolt yield point. In addition, the fastening can be stabilized, and the first bearing and the second bearing can be evenly preloaded. These features improve the rotational stability of the eccentric oscillation gear device.
(2) It is also possible that only the externally threaded portion has the elasticity portions. The externally threaded portion having the elasticity portions has a higher hardness than the internally threaded portion not having the elasticity portions.
(3) It is also possible that only the internally threaded portion has the elasticity portions. The externally threaded portion not having the elasticity portions has a lower hardness than the internally threaded portion having the elasticity portions.
(4) It is also possible that each of the elasticity portions has a concave shape formed in an inclined surface of associated one of the threads.
(5) It is also possible that at least the externally threaded portion has the elasticity portions. In the fastening portion before tightening, the shape of the threads having the elasticity portions is inclined from the feet of the threads toward crests of the threads in such a direction that the first member and the second member come close to each other along the axial direction during tightening.
(6) It is also possible that a number of threads of the externally threaded portion and the internally threaded portion engaging with each other is two or more times as large as in a case where no elasticity portions are provided.
(7) It is also possible that the number of threads of the externally threaded portion and the internally threaded portion engaging with each other is 14 or larger.
(8) An eccentric oscillation gear device according to another aspect of the invention includes: a casing; an internally toothed gear provided on an inner periphery of the casing; an externally toothed gear meshing with the internally toothed gear; an eccentric member for oscillating the externally toothed gear; a first member supported by the casing via a first bearing; a second member supported by the casing via a second bearing; and a fastening portion fastening the first member and the second member to each other in an axial direction of the casing. The fastening portion includes an externally threaded portion and an internally threaded portion, wherein at least one selected from the group consisting of feet of threads of the externally threaded portion and roots of threads of the internally threaded portion has elasticity portions for facilitating elastic deformation of the threads associated with the elasticity portions when the externally threaded portion and the internally threaded portion are tightened to each other.
   This configuration increases the contact area between the threads of the externally threaded portion and the threads of the internally threaded portion in the fastening portion because of the elastic deformation of the threads caused by the elasticity portions during tightening. Therefore, the variation of the tightening force can be reduced, and the axial tension between the first member and the second member can be stabilized. Thus, the same tightening torque can be applied to a plurality of fastening portions, and the variation of axial tensions can be reduced. This allows the upper limit of the variation of the axial tensions to be maintained below the bolt yield point. In addition, the fastening can be stabilized, and the first bearing and the second bearing can be evenly preloaded. These features improve the rotational stability of the eccentric oscillation gear device.
(9) A robot according to another aspect of the invention includes: a plurality of members including a movably connected arm; a coupling portion rotatably coupling the plurality of members including the arm; and an eccentric oscillation gear device mounted to the coupling portion. The eccentric oscillation gear device includes: a casing; a first member supported by the casing via a first bearing; a second member supported by the casing via a second bearing; and a fastening portion fastening the first member and the second member to each other in an axial direction of the casing. The fastening portion includes an externally threaded portion and an internally threaded portion. wherein at least one selected from the group consisting of feet of threads of the externally threaded portion and roots of threads of the internally threaded portion has elasticity portions for facilitating elastic deformation of the threads associated with the elasticity portions when the externally threaded portion and the internally threaded portion are tightened to each other.
   This configuration increases the contact area between the threads of the externally threaded portion and the threads of the internally threaded portion in the fastening portion because of the elastic deformation of the threads caused by the elasticity portions during tightening. Therefore, the variation of the tightening force can be reduced, and the axial tension between the first member and the second member can be stabilized. Thus, the same tightening torque can be applied to a plurality of fastening portions, and the variation of axial tensions can be reduced. This allows the upper limit of the variation of the axial tensions to be maintained below the bolt yield point. In addition, the fastening can be stabilized, and the first bearing and the second bearing can be evenly preloaded. These features improve the tightening between the first member and the second member that perform relative rotation, improving the rotational stability. Therefore, the rotational stability of the eccentric oscillation gear device can be improved. This stabilizes the axial tensions and thus stabilizes the rigidity of the eccentric oscillation gear device when it is subjected to the moments. Therefore, the positional and trajectory accuracy of the robot can be stabilized at a high level.
(10) It is also possible to provide a mounting-fastening portion that couples the eccentric oscillation gear device and the coupling portion. The mounting-fastening portion includes a mounting-externally threaded portion and a mounting-internally threaded portion. wherein at least one selected from the group consisting of feet of threads of the mounting-externally threaded portion and roots of threads of the mounting-internally threaded portion has mounting-elasticity portions for facilitating elastic deformation of the threads associated with the elasticity portions when the mounting-externally threaded portion and the mounting-internally threaded portion are tightened to each other.
(11) An industrial machine according to another aspect of the invention includes: a plurality of members connected to each other; a coupling portion rotatably coupling the plurality of members; and an eccentric oscillation gear device mounted to the coupling portion. The eccentric oscillation gear device includes: a casing; a first member supported by the casing via a first bearing; a second member supported by the casing via a second bearing; and a fastening portion fastening the first member and the second member to each other in an axial direction of the casing. The fastening portion includes an externally threaded portion and an internally threaded portion. wherein at least one selected from the group consisting of feet of threads of the externally threaded portion and roots of threads of the internally threaded portion has elasticity portions for facilitating elastic deformation of the threads associated with the elasticity portions when the externally threaded portion and the internally threaded portion are tightened to each other.
   This configuration increases the contact area between the threads of the externally threaded portion and the threads of the internally threaded portion in the fastening portion because of the elastic deformation of the threads caused by the elasticity portions during tightening. Therefore, the variation of the tightening force can be reduced, and the axial tension between the first member and the second member can be stabilized. Thus, the same tightening torque can be applied to a plurality of fastening portions, and the variation of axial tensions can be reduced. This allows the upper limit of the variation of the axial tensions to be maintained below the bolt yield point. In addition, the fastening can be stabilized, and the first bearing and the second bearing can be evenly preloaded. These features improve the tightening between the first member and the second member that perform relative rotation, improving the rotational stability. Therefore, the rotational stability of the eccentric oscillation gear device can be improved. This stabilizes the axial tensions and thus stabilizes the rigidity of the eccentric oscillation gear device when it is subjected to the moments. Therefore, the positional and trajectory accuracy of the industrial machine can be stabilized at a high level.
(12) It is also possible to provide: a mating member using the eccentric oscillation gear device; and a mounting-fastening portion that couples the eccentric oscillation gear device and the mating member. The mounting-fastening portion includes a mounting-externally threaded portion and a mounting-internally threaded portion. At least one selected from the group consisting of feet of threads of the mounting-externally threaded portion and roots of threads of the mounting-internally threaded portion has mounting-elasticity portions for facilitating elastic deformation of the threads associated with the elasticity portions when the mounting-externally threaded portion and the mounting-internally threaded portion are tightened to each other.

### ADVANTAGEOUS EFFECTS

The present invention provides an eccentric oscillation gear device, a robot, and an industrial machine capable of reducing variation of the forces, stabilizing the axial tensions between the shaft portion and the hold, and evenly preloading the main bearing.

### BRIEF DESCRIPTION OF THE DRAWINGS

Fig. 1 is a sectional view showing a first embodiment of an eccentric oscillation gear device according to the invention.
Fig. 2 is a sectional view along the line II-II in Fig. 1.
Fig. 3 is a sectional view showing an internally threaded portion of a fastening portion in the first embodiment.
Fig. 4 is a sectional view showing an externally threaded portion of the fastening portion in the first embodiment.
Fig. 5 is a sectional view showing a second embodiment of the eccentric oscillation gear device according to the invention.
Fig. 6 is a sectional view showing a third embodiment of a robot according to the invention.
Fig. 7 shows an example of an experiment on the eccentric oscillation gear device according to the invention.
Fig. 8 shows an example of an experiment on the eccentric oscillation gear device according to the invention.
Fig. 9 shows an example of an experiment on the eccentric oscillation gear device according to the invention.

### DESCRIPTION OF THE EMBODIMENTS

### <First Embodiment>

The following describes an eccentric oscillation gear device according to a first embodiment of the invention with reference to the accompanying drawings.

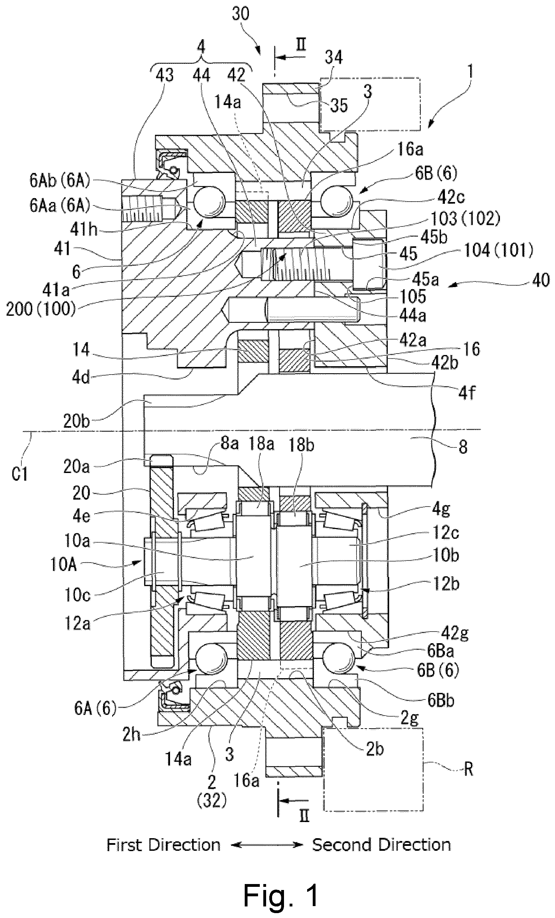

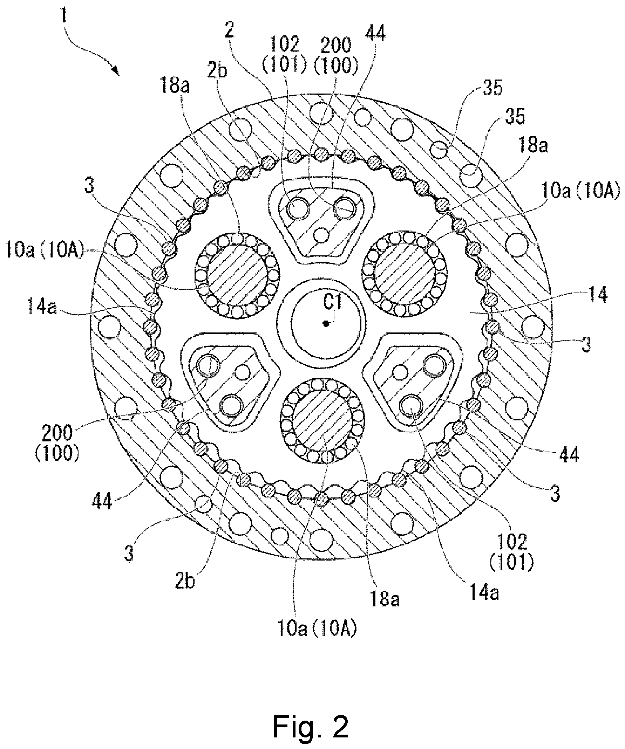

Fig. 1 is a sectional view showing the eccentric oscillation gear device according to the embodiment. Fig. 2 is a sectional view along the line II-II in Fig. 1. In these drawings, the reference sign 1 denotes the eccentric oscillation gear device.

### Eccentric Oscillation Gear Device

As shown in Figs. 1 and 2, the eccentric oscillation gear device 1 according to the embodiment is what is called a solid speed reducer (transmission) in which the input shaft 8 is solid. The eccentric oscillation gear device (speed reducer) 1 includes a casing 30 and a speed reduction mechanism 40. The casing 30 includes a body portion 32 and a flange portion 34. The flange portion 34 is shaped such that it extends outward in the radial direction from the body portion 32. In the following description of the first embodiment, the direction along an axis C1 of the body portion 32 is hereunder simply referred to as an axial direction, and the direction orthogonal to the axis C1 as viewed in the axial direction is referred to as a radial direction, and the circumferential direction about the axis C1 is simply referred to as a circumferential direction. The term "input side" refers to the side of the eccentric oscillation gear device 1 connected to a drive source, and the term "output side" refers to the side of the eccentric oscillation gear device 1 connected to a mechanical part such as an arm receiving the output from the eccentric oscillation gear device 1. The drive source is an example of a first member, and the mechanical part such as an arm is an example of a second member. The eccentric oscillation gear device 1 is configured to change the number of rotations at a predetermined ratio and transmit a resulting driving force between the first member and the second member.

The body portion 32 (one example of a first tubular portion) is shaped like a tube extending along the axis C1. The body portion 32 is open at the input side in the direction of the axis C1. The opening of the body portion 32 houses the speed reduction mechanism 40 so as to be rotatable. The flange portion 34 is integrated with the body portion 32. The eccentric oscillation gear device 1, to which the rotation from the motor is input, has a plurality (e.g., three) of transmission gears 20 exposed to the outside.

The flange portion 34 is provided on the outer periphery of the casing 30. Through-holes 35 are formed in the flange portion 34 so as to extend in the axial direction through the flange portion 34. The through-holes 35 are arranged at intervals in the circumferential direction of the flange portion 34. The through-holes 35 are fastening holes penetrated by fastening members such as bolts for fastening the eccentric oscillation gear device 1 to a robot R (described later). The through-holes 35 has an internally threaded portion (not shown) formed therein. The internally threaded portion threadably receives the fastening member. The through-hole 35 and the fastening member constitute a mounting-fastening portion (described later).

In the eccentric oscillation gear device 1, the input shaft 8 corresponding to the input gear 20b is rotated to rotate a crankshaft (eccentric member) 10A. In conjunction with eccentric portions 10a and 10b of the crankshaft 10A, the oscillating gears 14 and 16 are oscillatorily rotated. In this way, the input rotation is decelerated, and the decelerated rotation can be output.

The eccentric oscillation gear device 1 includes an outer tube (casing) 2 corresponding to the body portion 32 (the first tubular portion), a carrier 4, which is an example of a second tubular portion, the input shaft 8, a plurality of (for example, three) crankshafts 10A, the first oscillating gear 14, the second oscillating gear 16, and a plurality of (for example, three) transmission gears 20.

The outer tube 2 is substantially shaped like a circular cylinder and constitutes the outer surface of the eccentric oscillation gear device 1. The outer tube 2 has a plurality of pin grooves 2b formed in the inner circumferential surface thereof. Each pin groove 2b extends in the axial direction of the outer tube 2 and has a semicircular cross-sectional shape along the plane orthogonal to the axial direction. The pin grooves 2b are arranged at regular intervals in the circumferential direction along the inner circumferential surface of the outer tube 2.

The outer tube 2 has a plurality of internal tooth pins (internal teeth) 3. The internal tooth pins 3 are attached in the pin grooves 2b. More specifically, each internal tooth pin 3 is fitted in the corresponding pin groove 2b and retained therein such that it extends in the axial direction of the outer tube 2. In this manner, the plurality of internal tooth pins 3 are arranged at regular intervals along the circumference of the outer tube 2. The internal tooth pins 3 mesh with first external teeth 14a of the first oscillating gear 14 (externally toothed gear) and second external teeth 16a of the second oscillating gear 16 (externally toothed gear).

The carrier 4 is housed within the outer tube 2 so as to be coaxial with the outer tube 2. The carrier 4 is rotatable relative to the outer tube 2 (casing 30) about the same axis. More specifically, the carrier 4, positioned radially inside the outer tube 2, is supported via a pair of main bearings 6 such that the carrier 4 is rotatable relative to the outer tube 2. The main bearings 6 are spaced apart from each other in the axial direction. The carrier 4 is divided into a first carrier (first member; shaft) 41 and a second carrier (second member; hold) 42 in the direction of the axis C1. The first carrier 41 faces the first direction. The second carrier 42 faces the second direction. The first direction corresponds to the output side mentioned above. The second direction corresponds to the input side mentioned above. The main bearings 6 are, for example, ball bearings having spherical rolling elements. The present embodiment, however, is not limited to such, and the main bearings 6 can be alternatively selected from a variety of bearings including roller bearings, tapered roller bearings, and plain bearings. A tapered roller bearing has tapered rolling elements.

The first carrier 41 includes a disk-shaped base plate 43 and a plurality of (e.g., three in the present embodiment) of pillars (shaft portions) 44 protruding toward the second direction from the end of the base plate 43 that faces the second direction. In the embodiment, the base plate 43 and the pillars 44 are integrally molded. A first bearing receiving part 41h is formed in the outer circumferential surface 41a of the first carrier 41. The first bearing receiving part 41h receives the inner race 6Aa of the first bearing (main bearing) 6A fitted thereon. A first bearing receiving part 2h is formed in the inner circumferential surface of the portion of the outer tube 2 (casing 30) facing the first direction. The first bearing receiving part 2h receives the outer race 6Ab of the first bearing 6A fitted thereon.

The pillars 44 of the first carrier 41 have a columnar shape extending along the direction of the axis C1. The pillars 44 also have a triangular shape as viewed from the direction of the axis C1. The pillars 44 are positioned, in the circumferential direction, between the mounting holes 4e (described later) of the base plate 43. This means that the pillars 44 are arranged at equal intervals in the circumferential direction on the second direction side of the base plate 43. The diameter of the pitch circle of the pillars 44 is substantially the same as the diameter of the pitch circle of the mounting holes 4e.

The pillars 44 have flat distal ends 44a. The distal ends 44a of the pillars 44 have internally threaded portions 200 as fastening portions 100. In the embodiment, each of the pillars 44 has two fastening portions 100. The present embodiment, however, is not limited to such. As another example, each of the pillars 44 may have three or more fastening portions 100. The fastening portions 100 are positioned on the same circle around the axis C1. That is, the fastening portions 100 formed in each of the three pillars 44 are positioned on the same circle around the axis C1. Accordingly, the six fastening portions 100 are all positioned on the same circle around the axis C1. Thus, each pitch circle of the six fastening portions 100 is centered on the axis C1 and has the same diameter.

Each of the internally threaded portions 200 extends from the distal end 44a of the pillar 44 toward the first direction. A bolt (fastener) 101 is tightened to the internally threaded portion 200. In this way, the first carrier 41 and the second carrier 42 are integrally assembled together.

The second carrier 42 is shaped like a circular plate. The second carrier 42 is positioned such that its first end 42a facing the first direction abuts against the distal ends 44a of the pillars 44 forming the first carrier 41. In this manner, the second carrier 42 is positioned relative to the first carrier 41. A gap is thus left between the base plate 43 of the first carrier 41 and the second carrier 42. This gap is sized equally to the height of the pillars 44. This gap is surrounded by the casing 30, so that an oscillating gear housing part is formed to house the oscillating gears 14, 16. A second bearing receiving part 42g is formed in the outer circumferential surface 42c of the second carrier 42. The second bearing receiving part 42g receives the inner race 6Ba of the second bearing (main bearing) 6B fitted thereon. A second bearing receiving part 2g is formed in the inner circumferential surface of the portion of the outer tube 2 (casing 30) facing the second direction. An outer race 6Bb of the second bearing 6B is fitted on the second bearing receiving part 2g.

The first end 42a of the second carrier 42 is entirely flat. The second carrier 42 has mating holes 45 penetrating therethrough in the thickness direction of the second carrier 42, which are positioned correspondingly to the internally threaded portions 200. The mating holes 45 receive a bolt (fastener) 101 inserted from the second direction side of the second carrier 42. The bolt 101 is tightened to the internally threaded portion 200 of the pillar 44. In this way, the first carrier 41 and the second carrier 42 are integrally assembled together. The bolt 101 and the internally threaded portion 200 constitute the fastening portion 100. The fastening portion 100 will be described later.

When the bolt 101 is tightened to the internally threaded portions 200, the shaft 102 of the bolt 101 is fitted in the internally threaded portion 200 of the pillar 44 and the mating hole 45 of the second carrier 42. Accordingly, the shaft 102 of the bolt 101 extend across the first carrier 41 and the second carrier 42.

The second end 42b of the second carrier 42 that faces the second direction has counterboring parts 55 that are in communication with the mating holes 45. Each of the counterboring parts 23 receives a head 104 of a corresponding one of the bolts 101. This reduces the protruding height of the head 104 of the bolt 101 beyond the second end 42b of the second carrier 42. The bottom surface 45b of the counterboring part 45a is contacted by a bearing surface 105 of the head 104 of the bolt 101 tightened.

The input shaft 8 serves as an input part for receiving a driving force input thereto from a driving motor (not shown). The input shaft 8 extends through the through hole 4f formed in the second carrier (hold) 42 and the through hole 4d formed in the base plate 43. The input shaft 8 is disposed such that its axis is aligned with the axis of the outer tube 2 and the carrier 4, and the input shaft 8 is rotatable about the axis. An input gear 8a is provided on the outer circumferential surface of the distal end of the input shaft 8.

In the outer tube 2, the three crankshafts 10A are arranged at regular intervals around the input shaft 8 (see Fig. 2). The crankshafts 10A are each supported by a pair of crank bearings 12a and 12b so as to be rotatable about an axis relative to the carrier 4 (see Fig. 1).

Each crankshaft 10A has a shaft body 12c and eccentric portions 10a and 10b integrated with the shaft body 12c.

One end of each crankshaft 10A has a mating portion 10c to which the transmission gear 20 is mounted. The one end of the crankshaft 10A is positioned on the axially outer side of the mounting holes 4e formed in the base plate 43. The eccentric oscillation gear device 1 relating to the present embodiment is not limited to the example case shown in Fig. 1. For example, it is also possible that the crankshafts 10A are oriented opposite in the axial direction. In such a case, the mating portion 10c is located on the axially outer side of the mounting hole 4g formed in the second carrier (end plate) 42.

The first oscillating gear 14 is located in the closed space within the outer tube 2 and is attached to the first eccentric portion 10a of each crankshaft 10A via a first roller bearing 18a. As each crankshaft 10A rotates, the first eccentric portion 10a eccentrically rotates. The eccentric rotation results in the first oscillating gear 14 oscillatorily rotating while meshing with the internal tooth pins 3.

The second oscillating gear 16 is located in the closed space within the outer tube 2 and is attached to the second eccentric portion 10b of each crankshaft 10A via a second roller bearing 18b. The first and second oscillating gears 14 and 16 are arranged in the axial direction so as to correspond to the first and second eccentric portions 10a and 10b. As each crankshaft 10A rotates, the second eccentric portion 10b eccentrically rotates. The eccentric rotation results in the second oscillating gear 16 oscillatorily rotating while meshing with the internal tooth pins 3.

Each transmission gear 20 transmits the rotation of the input gear 8a to the corresponding one of the crankshafts 10A. Each transmission gear 20 is fitted around the mating portion 10c of the corresponding crankshaft 10A. Each transmission gear 20 is rotatable integrally with the crankshaft 10A around the same axis as the crankshaft 10A. Each transmission gear 20 has external teeth 20a meshing with the input gear 8a.

### Fastening Portion

As shown in Fig. 1, each fastening portion 100 includes the internally threaded portion 200 and the bolt 101. The bolt 101 includes the shaft 102, an externally threaded portion 103 formed on the shaft 102, and the head 104 formed on a portion of the shaft 102 facing the second direction. The head 104 is disposed coaxially with the shaft 102 and has a larger diameter than the shaft 102. The hardness of the internally threaded portion 200 is lower than that of the bolt 101. The internally threaded portion 200 will be hereinafter described.

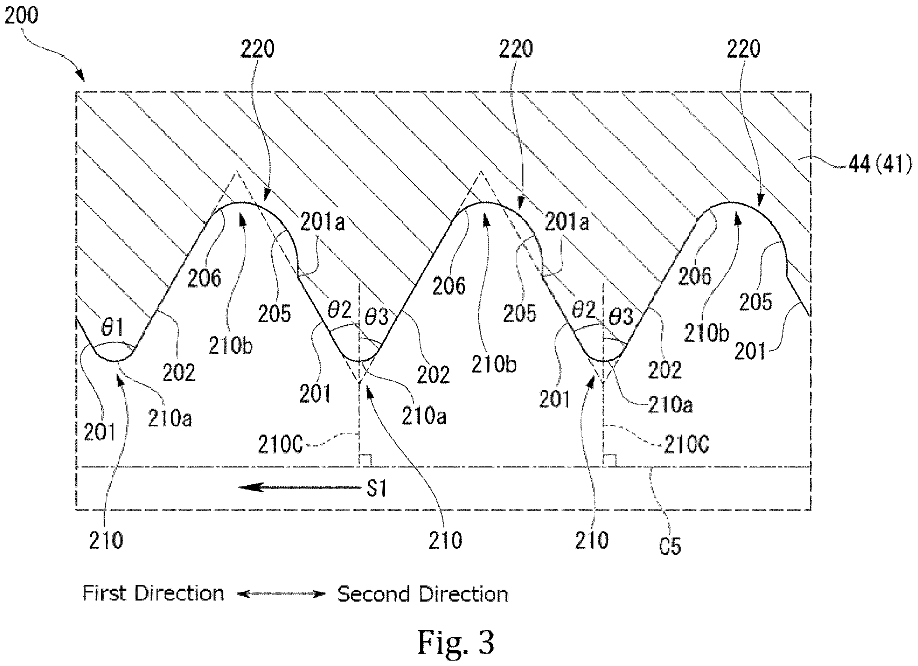

Fig. 3 is a sectional view of the threads 210 of the internally threaded portion 200 forming the fastening portion 100 (Fig. 3 includes the axis C5 of the bolt 101). Each of the threads 210 in the internally threaded portion 200 has a pushing flank surface (inclined surface) 201, a back flank surface 202, and an elasticity portion 220. The elasticity portion 220 is provided at the root of the internal threads of the internally threaded portion 200. The root of the internal threads is positioned between the pushing flank surface 201 and the back flank surface 202.

When the bolt 101 is tightened to the internally threaded portion 200, the internally threaded portion 200 and the bolt 101 approach each other along the axis C5 of the internally threaded portion 200 and the bolt 101. This direction is defined as the approaching direction. The approaching direction is a direction along the axis C1 shown in Fig. 1. Therefore, for the internally threaded portion 200, the second direction, from the left to the right in Fig, 3, is the approaching direction. In Fig. 3, the arrow S1 extending from the right to the left indicates the direction of travel of the bolt 101 during tightening. Therefore, for the bolt 101, the approaching direction is the first direction, from the right to the left in Fig. 3 (i.e., the traveling direction S1).

The angle θ1 of the threads 210 is about 63.5 degrees. The flank angle θ2 of the pushing flank surface 201 is about 30.5 to 33 degrees. The flank angle θ3 of the back flank surface 202 is about 33 degrees. The pitch of the threads 210 is the distance between adjacent roots 210b parallel to the axis C5. The thread 210 is shaped so as to slope in the traveling direction S1 from the root 210b toward the crest 210a of the thread 210. The pushing flank surface 201 and the back flank surface 202 are formed on the upper portion of the thread 210 proximate to the crest 210a of the thread 210. The upper portion of the thread 210 is the portion of the thread 210 that is proximate to the crest 210a and proximate to the axis C5 of the internally threaded portion 200.

The pushing flank surface 201 and the back flank surface 202 are opposed to each other along the axis C5 with the thread 210 interposed therebetween. Therefore, the pushing flank surface 201 is formed on the opposite side of the thread 210 along the axis C5 relative to the back flank surface 202. The pushing flank surface 201 is formed on the thread 210 to face the first direction. The back flank surface 202 is formed on the thread 210 to face the second direction.

The pushing flank surface 201 and the back flank surface 202 are not in line symmetry with respect to the imaginary line 210C. The imaginary line 210C passes through the crest 210a of the thread 210 and is orthogonal to the axis C5 of the internally threaded portion 200. As described above, the thread 210 is shaped so as to slope in the traveling direction S1 from the root 210b toward the crest 210a. Thus, the pushing flank surface 201 and the back flank surface 202 are not in line symmetry with respect to the imaginary line 210C. The pushing flank surface 201 slopes with respect to the imaginary line 210C by the flank angle θ2, and the lower end 201a of the pushing flank surface 201 is away from the imaginary line 210C toward the first direction.

In other words, the pushing flank surface 201 slopes such that the lower end 201a is away from the imaginary line 210C toward the first direction (the traveling direction S1 of the bolt 101 during tightening) as compared to the crest 210a.

The root 210b of the thread 210 has a pushing root surface 205 adjacent to the pushing flank surface 201 and a back root surface 206 adjacent to the back flank surface 202. The pushing root surface 205 and the back root surface 206 constitute an elasticity portion 220. The elasticity portion 220 has a concave shape that is discontinuously connected to the pushing flank surface 201 of the thread 210. The lower end 201a corresponding to the boundary between the pushing flank surface 201 and the elasticity portion 220 is formed as a ridge extending helically around the axis C5 along the thread 210. Although the pushing root surface 205 forms a cavity relative to the pushing flank surface 201, the lower end 201a is not necessarily formed as a sharp ridge.

In the longitudinal section of the thread 210 containing the axis C5, the pushing root surface 205 has a rounded shape curved from the lower end 201a of the pushing flank surface 201 so as to be convex toward the outside of the internally threaded portion 200 relative to the extended surface of the pushing flank surface 201 (shown by the broken line in Fig. 3). Further, the pushing root surface 205 is continuously connected to the back root surface 206 to form the smooth root 210b. In this way, the pushing root surface 205 forms a cavity relative to the extended surface of the pushing flank surface 201. In the longitudinal section of the thread 210 containing the axis C5, the back root surface 206 has a rounded shape curved from the back flank surface 202 toward the pushing root surface 205 relative to the extended surface of the back flank surface 202 (shown by the broken line in Fig. 3) so as to be convex toward the outside of the internally threaded portion 200.

In the longitudinal section of the thread 210 containing the axis C5, the back root surface 206 is continuously and smoothly connected to the back flank surface 202. Accordingly, the back flank surface 202 is continuous to the root 210b via the back root surface 206. At the root 210b, the back root surface 206 is adjacent to the pushing root surface 205 and is continuously and smoothly connected to the pushing root surface 205. The pushing root surface 205 is discontinuously connected to the pushing flank surface 201 in the upper side of the thread 210.

The elasticity portion 220 is preferably formed for the entire length of the internally threaded portion 200 along the axis C5, but it is also possible that the elasticity portion 220 is formed in only the portion of the internally threaded portion 200 that tightly contacts with the bolt 101. In addition, the shape of the root surface on the root 210b side may be varied for each thread 210. For example, in the lower portion of the thread 210, the depth of the cavity in the side surface that receives the pressure may be larger toward the direction away from the bearing surface 105. More specifically, the radius of curvature defining the pushing root surface 205 may be larger toward the direction away from the bearing surface 105. From the same perspective, the position of the lower end of the pushing flank surface 201 may be varied for each thread 210. For example, on the engaging side of the internally threaded portion 200, the lower end of the pushing flank surface 201 is positioned proximate to the root of the thread 210. The position of the lower end may be gradually shifted toward the upper side of the thread 210, from the engaging side to the inner side of the internally threaded portion 200.

In the thread 210 of the embodiment, the lower end 201a of the pushing flank surface 201 is at the largest distance from the imaginary line 210C in the traveling direction S1, among other portions of the pushing flank surface 201. At the same time, the elasticity portion 220 facilitates elastic deformation of the entire thread 210. Accordingly, the entirety of the thread 210, which includes the elasticity portion 220, is shaped to be susceptible to elastic deformation, such that the pushing flank surface 201 pushed by a pushing flank surface 111 (described later) is moved toward the second direction.

The externally threaded portion 103 of the bolt 101 will be hereinafter described.

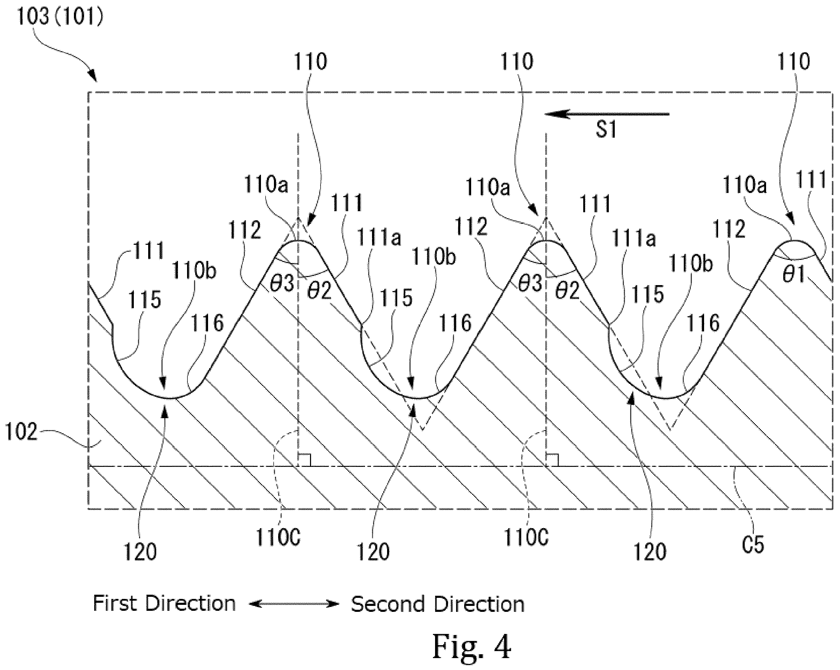

Fig. 4 is a sectional view of the threads 110 of the externally threaded portion 103 forming the fastening portion 100 (Fig. 4 includes the axis C5 of the bolt 101). Each of the threads 110 in the externally threaded portion 103 has a pushing flank surface 111, a back flank surface 112, and an elasticity portion 120. The elasticity portion 120 is provided at the root of the external threads of the externally threaded portion 103. The root of the external threads is positioned between the pushing flank surface (inclined surface) 111 and the back flank surface 112.

As described above, for the externally threaded portion 103, the first direction is the approaching direction. Therefore, the approaching direction for the externally thread portion 103 corresponds to the approaching direction for the bolt 101.

The angle θ1 of the threads 110 is about 63.5 degrees. The flank angle θ2 of the pushing flank surface 111 is about 30.5 to 33 degrees. The flank angle θ3 of the back flank surface 112 is about 33 degrees. The pitch of the threads 110 is the distance between adjacent roots 110b parallel to the axis C5. The thread 110 is shaped so as to slope in the direction opposite to the traveling direction S1 from the vicinity of the root 110b toward the crest 110a of the thread 110. The pushing flank surface 111 and the back flank surface 112 are formed on the upper portion of the thread 110 proximate to the crest 110a of the thread 110. The upper portion of the thread 110 is the portion of the thread 110 that is proximate to the crest 110a and proximate to the axis C5 of the externally threaded portion 103.

The pushing flank surface 111 and the back flank surface 112 are opposed to each other along the axis C5 with the thread 110 interposed therebetween. Therefore, the pushing flank surface 111 is formed on the opposite side of the thread 110 along the axis C5 relative to the back flank surface 112. The pushing flank surface 111 is formed on the surface of the thread 110 facing the bearing surface 105 (see Fig. 1). The pushing flank surface 111 is formed on the thread 110 to face the second direction. The back flank surface 112 is formed on the thread 110 to face the first direction.

The pushing flank surface 111 and the back flank surface 112 are not in line symmetry with respect to the imaginary line 110C. The imaginary line 110C passes through the crest 110a of the thread 110 and is orthogonal to the axis C5 of the externally threaded portion 103. As described above, the thread 110 is shaped so as to slope in the direction opposite to the traveling direction S1 from the root 110b toward the crest 110a. The pushing flank surface 111 slopes with respect to the imaginary line 110C by the flank angle θ2, and the lower end 111a of the pushing flank surface 111 is away from the imaginary line 110C toward the second direction.

In other words, the pushing flank surface 111 slopes such that the lower end 111a is away from the imaginary line 110C toward the direction opposite to the traveling direction S1 of the bolt 101 during tightening, as compared to the crest 110a.

The root 110b of the thread 110 has a pushing root surface 115 adjacent to the pushing flank surface 111 and a back root surface 116 adjacent to the back flank surface 112. The pushing root surface 115 and the back root surface 116 constitute an elasticity portion 120. The elasticity portion 120 has a concave shape that is discontinuously connected to the pushing flank surface 111 of the thread 110.

In the longitudinal section of the thread 110 containing the axis C5, the pushing root surface 115 has a rounded shape curved from the lower end 111a of the pushing flank surface 111 so as to be convex toward the inside of the externally threaded portion 103 relative to the extended surface of the pushing flank surface 111 (shown by the broken line in Fig. 4). Further, the pushing root surface 115 is continuously connected to the back root surface 116 to form the smooth root 110b. In this way, the pushing root surface 115 forms a cavity relative to the extended surface of the pushing flank surface 111. The lower end 111a corresponding to the boundary between the pushing flank surface 111 and the pushing root surface 115 is formed as a ridge extending helically around the axis C5 along the thread 110, as with the pushing flank surface 201 and the elasticity portion 220. Although the pushing root surface 115 forms a cavity relative to the pushing flank surface 111, the lower end 111a is not necessarily formed as a sharp ridge. In the longitudinal section of the thread 110 containing the axis C5, the back root surface 116 has a rounded shape curved from the back flank surface 112 toward the pushing root surface 115 relative to the extended surface of the back flank surface 112 (shown by the broken line in Fig. 4) so as to be convex toward the inside of the externally threaded portion 103.

In the longitudinal section of the thread 110 containing the axis C5, the back root surface 116 is continuously and smoothly connected to the back flank surface 112. Accordingly, the back flank surface 112 is continuous to the root 110b via the back root surface 116. At the root 110b, the back root surface 116 is adjacent to the pushing root surface 115 and is continuously and smoothly connected to the pushing root surface 115. The pushing root surface 115 is discontinuously connected to the pushing flank surface 111 via the lower end 111a of the pushing flank surface 111. The pushing root surface 115 and the back root surface 116 are smoothly continuous to each other.

The elasticity portion 120 is preferably formed for the entire length of the externally threaded portion 103 along the axis C5, but it is also possible that the elasticity portion 120 is formed in only the portion of the bolt 101 that tightly contacts with the internally threaded portion 200. In addition, the shape of the root surface on the root 110b side may be varied for each thread 110. For example, in the lower portion of the thread 110, the depth of the cavity in the side surface that receives the pressure may be larger toward the direction away from the bearing surface 105. More specifically, the radius of curvature defining the pushing root surface 115 may be larger toward the direction away from the bearing surface 105. From the same perspective, the position of the lower end 111a of the pushing flank surface 111 may be varied for each thread 110. For example, on the engaging side of the externally threaded portion 103, the lower end of the pushing flank surface 111 is positioned proximate to the root of the thread 110. The position of the lower end may be gradually shifted toward the upper side of the thread 110, from the engaging side to the inner side of the externally threaded portion 103.

In the thread 110 of the embodiment, the lower end 111a of the pushing flank surface 111 is at the largest distance from the imaginary line 110C in the direction opposite to the traveling direction S1, among other portions of the pushing flank surface 111. At the same time, the elasticity portion 120 facilitates elastic deformation of the entire thread 110.

### Tightening

When the bolt 101 is tightened into the internally threaded portion 200, the pushing flank surface 111 of the thread 110 of the externally threaded portion 103 presses the pushing flank surface 201 of the thread 210 of the internally threaded portion 200. The elasticity portion 220 provided at the lower portion of the thread 210 forms a cavity relative to the extended surface of the pushing flank surface 201 and is curved toward the inside of the thread 210. Further, the elasticity portion 220 has a curved sectional shape continuous to the root 210b. Therefore, when the force from the bolt 101 is to cause deformation of the thread 210 toward the bearing surface 105 of the bolt 101 (the right side of the drawing), much of the deformation can be concentrated on the elasticity portion 220, resulting in elastic deformation of the thread 210.

Likewise, the elasticity portion 120 provided at the lower portion of the thread 110 forms a cavity relative to the extended surface of the pushing flank surface 111 and is curved toward the inside of the thread 110. Further, the elasticity portion 120 has a curved sectional shape continuous to the root 110b. Therefore, when the force from the internally threaded portion 200 is to cause deformation of the thread 110 toward the traveling direction S1 of the bolt 101 (the left side of the drawing), much of the deformation can be concentrated on the elasticity portion 120, resulting in elastic deformation of the thread 110.

The elastic deformation of the threads 110, 210 caused by the elasticity portions 120, 220 can produce strong reaction forces. Therefore, a high frictional force can be applied between the pushing flank surface 201 and the pushing flank surface 111. In addition, the contact area can be larger between the pushing flank surface 201 and the pushing flank surface 111.

When the elasticity portions 120, 220 are formed as curved surfaces forming a cavity relative to the extended surfaces of the pushing flank surfaces 111, 201 in the longitudinal section containing the axis C5, the shape of the curve is not limited to a rounded shape having a constant radius of curvature, but may also be a composite rounded shape made from a combination of a plurality of curved surfaces having different radii of curvature. In the threads 110, 210, the curves of the elasticity portions 120, 220 are not limited to a simple rounded shape, but may also be a composite rounded shape. In addition, in the thread 110 of the bolt 101, the pushing flank surface 111 and the back flank surface 112 may coincide with imaginary planes symmetrical with respect to the imaginary line 110C.

With the threads 110, 210 of the embodiment, when the bolt 101 is tightened into the internally threaded portion 200, the lower end 111a of the pushing flank surface 111 or the lower end 201a of the pushing flank surface 201 first contacts the associated pushing flank surfaces 210, 110. As a result, the forces from the threads 110, 210 trigger the elastic deformation of the elasticity portions 120, 220 via the lower ends 111a, 201a. Further, the mutual repulsive forces in the fastening portion 100 are prevented from being concentrated toward the crests 110a, 210a.

Further, in the elasticity portions 120, 220, the back root surfaces 116, 206 have a rounded shape curved from the extended surfaces of the back flank surfaces 112, 202 and continuous to the roots 110b, 210b in the longitudinal section containing the axis C5. The back root surfaces 116, 206 are continuous to the pushing root surfaces 115, 205 extending from the roots 110b, 201b.

Therefore, in the embodiment, the threads 110, 210 provided with the elasticity portions 120, 220 have a thinner base (foot) compared to threads in which the pushing root surfaces 115, 205 do not form a cavity. As a result, in the embodiment, the threads 110, 210 are more susceptible to elastic deformation compared to threads in which the pushing root surfaces 115, 205 do not form a cavity. This configuration achieves a required tightening torque.

In the threads 110, 210, the connection portions between the back flank surfaces 112, 202 and the back root surfaces 116, 206 at the lower ends of the back flank surfaces 112, 202 are positioned closer to the roots 110b, 210b than are the lower ends 111a, 201a of the pushing flank surfaces 111, 201.

When the rounded shape of the back root surfaces 116, 206 is larger than the rounded shape of the pushing root surfaces 115, 205, the lower ends of the back flank surfaces 112, 202 tend to be positioned closer to the crests 110a, 210a than are the lower ends 111a, 201a of the pushing flank surfaces 111, 201. Therefore, the threads 110, 210 may undesirably fail to have sufficient strength.

When the bolt 101 is tightened into the internally threaded portion 200, the lower ends 111a, 201a of the pushing flank surfaces 111, 201 in the threads 110, 210 first contact the opposed pushing flank surfaces 201, 111.

As a result, the tightening force between the bolt 101 and the internally threaded portion 200 is efficiently transferred to the elasticity portions 120, 220 via the lower ends 111a, 201a as an elastic deformation force acting in such a direction as to expand the pushing root surfaces 115, 205. The elastic deformation of the pushing root surfaces 115, 205 produces strong repulsive forces and produces a strong frictional force between the pushing flank surface 111 and the pushing flank surface 201. In addition, since the lower ends 111a, 201a are preferentially contacted with the opposed pushing flank surfaces 201, 111, it can be prevented that the tightening force is concentrated on the crests 110a, 210a (thin portions) of the threads 110, 210.

The threads 110, 210 are inclined toward the pushing flank surfaces 111, 201. Accordingly, the threads 110, 210 have a high ability to resist each other's tightening force. Therefore, the tightening force is easily converted into elastic deformation of the elasticity portions 120, 220.

The eccentric oscillation gear device 1 of the embodiment is configured as above, and thus the fastening between the first carrier (shaft) 41 and the second carrier (hold) 42 causes the threads 110, 210 of the externally threaded portion 103 of the bolt (fastener) 101 and the internally threaded portion 200 of the pillar 44 to be contacted with each other and deformed elastically with the elasticity portions 120, 220. In this manner, it is possible to reduce the variation of the frictional force between the contact surfaces of the threads 110, 210 in the fastening portion 100. Therefore, the axial tension between the first carrier 41 and the second carrier 42 can be stabilized, and the main bearings 6 can be evenly preloaded. The same tightening torque can be applied to a plurality of fastening portions 100, and the variation of axial tensions in the plurality of fastening portions 100 during tightening can be reduced. This allows the upper limit of the variation of the axial tension to be maintained below the bolt yield point. As a result, the torque density for increasing the axial tension can be increased.

In addition, the tapered bearings serving as the crank bearings 12a, 12b used for the crankshaft (eccentric member) 10A can also be preloaded evenly. These features improve the rotational stability of the eccentric oscillation gear device 1 and extend the service life of the eccentric oscillation gear device 1. At the same time, the thread 210 of the internally threaded portion 200 provided in the first carrier (shaft) 41 can be elastically deformed with the elasticity portion 220 in a positive manner. Therefore, it is possible to increase the contact area between the thread 110 of the externally threaded portion 103 and the thread 210 of the internally threaded portion 200 constituting the fastening portion 100, thereby stabilizing the axial tension.

In the fastening portion 100, it is possible to reduce the variation of the frictional force between the contact surfaces of the bolt 101 and the first carrier (shaft) 41, and therefore, the axial tension between the first carrier (shaft) 41 and the second carrier (hold) 42 can be stabilized, and the main bearings 6 can be evenly preloaded. In addition, the hardness of the internally threaded portion 200 of the second carrier (hold) 42 can be lower than that of the bolt 101, such that the thread 210 of the internally threaded portion 200 can be elastically deformed with the elasticity portion 120, 220 in a positive manner. Therefore, it is possible to increase the contact area between the thread 110 of the bolt 101 and the thread 210 provided in the second carrier 42, thereby stabilizing the axial tension.

In the first embodiment described above, the eccentric oscillation gear device 1 may be what is called a hollow speed reducer (transmission) in which the rotating shaft that serves as the input portion has a hollow structure.

In the first embodiment described above, each of the three pillars 44 has two fastening portions 100 formed therein, but this configuration is not limitative. The number of fastening portions 100 may be changed as desired, as long as they are located on the same circle centered on the axis C1 in respective pillars 44 and symmetrically positioned in the individual pillars 44.

For example, each of the three pillars 44 may have three fastening portions 100 formed therein. In this case, for example, in addition to the two fastening portions 100 shown in Fig. 2, a third fastening portion 100 can be located equidistant from the two fastening portions 100 and on a circle centered on the axis C1 and smaller than the circle for the two fastening portions 100.

It is also possible that each of the three pillars 44 has one fastening portion 100 formed therein.

Further, in the fastening portion 100, it is also possible that the internally threaded portion 200 has the above configuration and the bolt 101 has a conventional shape. Alternatively, in the fastening portion 100, it is also possible that the externally threaded portion 103 has the above configuration and the internally threaded portion 200 has a conventional shape.

### <Second Embodiment>

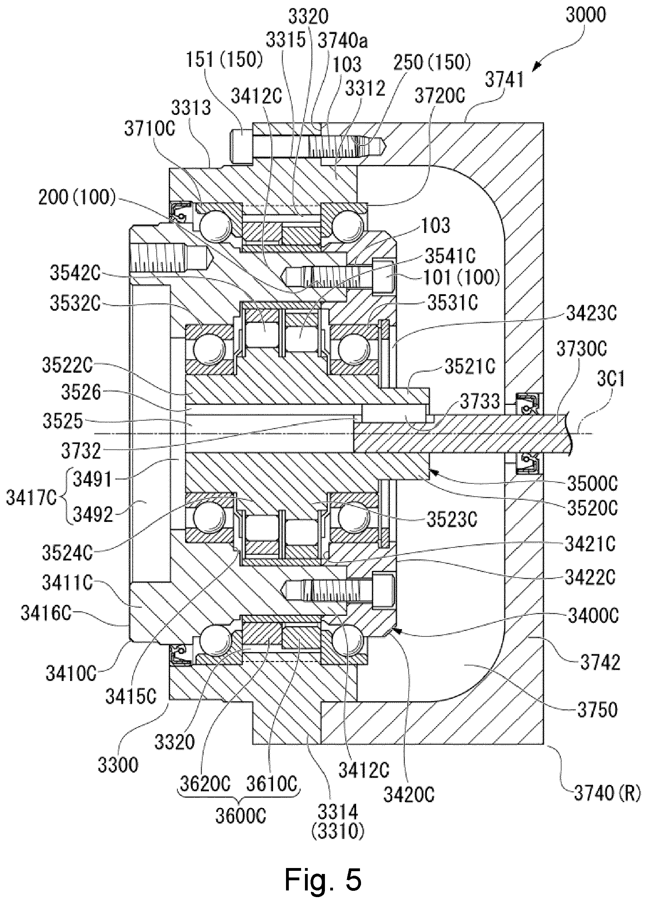

The following describes an eccentric oscillation gear device according to a second embodiment of the invention with reference to the accompanying drawings. Fig. 5 is a sectional view showing the eccentric oscillation gear device according to the embodiment. This embodiment is different from the first embodiment in terms of the crankshafts. In Fig. 5, the reference sign 3000 denotes the eccentric oscillation gear device.

As shown in Fig. 5, the eccentric oscillation gear device (speed reducer) 3000 of the embodiment is of what is called a center crank type. The eccentric oscillation gear device 3000 of the embodiment includes an outer tube 3300 and an outer wall 3740. The eccentric oscillation gear device 3000 includes a carrier 3400C, a crankshaft assembly 3500C, a gear unit 3600C, two main bearings 3710C, 3720C, and an input gear 3730C.

The output axis 3C1 shown in Fig. 5 corresponds to a central axis (axis) of the two main bearings 3710C, 3720C and the input gear 3730C. The outer tube 3300 and the carrier 3400C are capable of relative rotation about the output axis 3C1.

The driving force generated by a motor (not shown) or any other drive source (not shown) is inputted to the crankshaft assembly 3500C through the input gear 3730C extending along the output axis 3C1. The driving force inputted to the crankshaft assembly 3500C is transmitted to the gear unit 3600C disposed in an internal space surrounded by the outer tube 3300 and the carrier 3400C. The two main bearings 3710C, 3720C are fitted into an annular space formed between the outer tube 3300 and the carrier 3400C surrounded by the outer tube 3300. The outer tube 3300 or the carrier 3400C is rotated about the output axis 3C1 by the driving force transmitted to the gear unit 3600C.

The carrier 3400C includes a base (first carrier) 3410C and an end plate (second carrier) 3420C. The carrier 3400C as a whole is shaped like a cylinder. The end plate 3420C has a substantially disc-like shape. The outer circumferential surface of the end plate 3420C is partially surrounded by a second cylindrical portion 3312. The main bearing 3720C is fitted into an annular gap between the second cylindrical portion 3312 and the circumferential surface of the end plate 3420C. The outer circumferential surface of the end plate 3420C is formed so that the rollers of the main bearing 3720C roll directly on the end plate 3420C.

The base 3410C includes a base plate portion 3411C and a plurality of shaft portions 3412C. The outer circumferential surface of the base plate portion 3411C is partially surrounded by a third cylindrical portion 3313. The main bearing 3710C is fitted into an annular gap between the third cylindrical portion 3313 and the outer circumferential surface of the base plate portion 3411C. The outer circumferential surface of the base plate portion 3411C is formed so that the rollers of the main bearing 3710C roll directly on the outer circumferential surface of base plate portion 3411C. In an extension direction of the output axis 3C1, the base plate portion 3411C is away from the end plate 3420C. The base plate portion 3411C is substantially coaxial with the end plate 3420C. That is, the output axis 3C1 corresponds to the central axis of the base plate portion 3411C and the end plate 3420C.

The base plate portion 3411C includes an inner surface 3415C and an outer surface 3416C on the opposite side to the inner surface 3415C. The inner surface 3415C faces the gear unit 3600C. The inner surface 3415C and the outer surface 3416C extend along an imaginary plane (not shown) orthogonal to the output axis 3C1. A central through hole 3417C is formed through the base plate portion 3411C. The central through hole 3417C extends between the inner surface 3415C and the outer surface 3416C along the output axis 3C1. The output axis 3C1 corresponds to the central axis of the central through hole 3417C.

The end plate 3420C includes an inner surface 3421C and an outer surface 3422C on the opposite side to the inner surface 3421C. The inner surface 3421C faces the gear unit 3600C. The inner surface 3421C and the outer surface 3422C extend along an imaginary plane (not shown) orthogonal to the output axis 3C1. A central through hole 3423C is formed through the end plate 3420C. The central through hole 3423C extends between the inner surface 3421C and the outer surface 3422C along the output axis 3C1. The output axis 3C1 corresponds to the central axis of the central through hole 3423C.

Each of the plurality of shaft portions 3412C extends from the inner surface 3415C of the base plate portion 3411C toward the inner surface 3421C of the end plate 3420C. The end plate 3420C is connected to a distal end surface of each of the plurality of shaft portions 3412C. The end plate 3420C may be connected to a distal end surface of each of the plurality of shaft portions 3412C by a fastening portion 100, constituted by a bolt 101 and an internally threaded portion 200, and a positioning pin or the like.

### Fastening Portion

Since the fastening portion 100 has the same configuration as in the first embodiment shown in Figs. 3 and 4, the fastening portion 100 is provided with the same reference signs as in the first embodiment shown in Figs. 3 and 4, and the description thereof is omitted.

The gear unit 3600C is disposed between the inner surface 3415C of the base plate portion 3411C and the inner surface 3421C of the end plate 3420C. The plurality of shaft portions 3412C extend through the gear unit 3600C and are connected to the end plate 3420C. The gear unit 3600C includes two oscillating gears 3610C, 3620C. The oscillating gear 3610C is disposed between the end plate 3420C and the oscillating gear 3620C. The oscillating gear 3620C is disposed between the base plate portion 3411C and the oscillating gear 3610C. The oscillating gears 3610C, 3620C may be formed based on a common design drawing. Each of the oscillating gears 3610C, 3620C may be a trochoidal gear or a cycloidal gear. The principle of this embodiment is not limited to a particular type of gears used as the oscillating gears 3610C, 3620C.

Each of the oscillating gears 3610C, 3620C is meshed with a plurality of internal tooth pins 3320. When the crankshaft assembly 3500C rotates about the output axis 3C1, the oscillating gears 3610C, 3620C may perform circling movement (namely, oscillatory rotation) within a casing 3310 while being meshed with the internal tooth pins 3320. During this movement, respective centers of the oscillating gears 3610C, 3620C circle about the output axis 3C1. Relative rotation between the outer tube 3300 and the carrier 3400C is caused by the oscillatory rotation of the oscillating gears 3610C, 3620C.

Each of the oscillating gears 3610C, 3620C has a through hole formed at the respective center. The crankshaft assembly 3500C is fitted into the through holes formed at the respective centers of the oscillating gears 3610C, 3620C. Each of the oscillating gears 3610C, 3620C has a plurality of through holes formed so as to correspond to the plurality of shaft portions 3412C disposed along an imaginary circle defined around the output axis 3C1. The plurality of shaft portions 3412C are inserted into these through holes. These through holes have such a size that no interference occurs between the plurality of shaft portions 3412C and the oscillating gears 3610C, 3620C.

The crankshaft assembly 3500C includes a crankshaft 3520C, two journal bearings 3531C, 3532C, and two crank bearings 3541C, 3542C. The crankshaft 3520C includes a first journal 3521C, a second journal 3522C, a first eccentric portion 3523C, and a second eccentric portion 3524C. The first journal 3521C extends along the output axis 3C1 and is inserted into the central through hole 3423C of the end plate 3420C. The second journal 3522C, which is disposed on the opposite side to the first journal 3521C, extends along the output axis 3C1 and is inserted into the central through hole 3417C of the base plate portion 3411C.

The journal bearing 3531C is fitted into an annular space between the first journal 3521C and an inner wall of the end plate 3420C, which forms the central through hole 3423C. As a result, the first journal 3521C is joined to the end plate 3420C. The journal bearing 3532C is fitted into an annular space between the second journal 3522C and an inner wall of the base plate portion 3411C, which forms the central through hole 3417C. As a result, the second journal 3522C is joined to the base plate portion 3411C. Accordingly, the carrier 3400C can support the crankshaft assembly 3500C. In this embodiment, the end plate 3420C is an example of the first end wall. The base plate portion 3411C is an example of the second end plate.

The first eccentric portion 3523C is positioned between the first journal 3521C and the second eccentric portion 3524C. The second eccentric portion 3524C is positioned between the second journal 3522C and the first eccentric portion 3523C. The crank bearing 3541C is fitted into the through hole formed at the center of the oscillating gear 3610C and is joined to the first eccentric portion 3523C. As a result, the oscillating gear 3610C is mounted to the first eccentric portion 3523C. The crank bearing 3542C is fitted into the through hole formed at the center of the oscillating gear 3620C and is joined to the second eccentric portion 3524C. As a result, the oscillating gear 3620C is mounted to the second eccentric portion 3524C.

The first journal 3521C is substantially coaxial with the second journal 3522C and rotates about the output axis 3C1. Each of the first eccentric portion 3523C and the second eccentric portion 3524C is formed in a columnar shape and positioned eccentrically from the output axis 3C1. The first eccentric portion 3523C and the second eccentric portion 3524C eccentrically rotate with respect to the output axis 3C1 and impart oscillatory rotation to the oscillating gears 3610C, 3620C, respectively. In this embodiment, one of the first eccentric portion 3523C and the second eccentric portion 3524C is an example of the eccentric portion.

When the outer tube 3300 is fixed, the oscillating gears 3610C, 3620C are meshed with a plurality of internal tooth pins 3320 of the outer tube 3300. Therefore, the oscillatory rotation of the oscillating gears 3610C, 3620C is converted into the circling movement of the crankshaft 3520C and the rotation of the base plate portion 3411C about the output axis 3C1. The end plate 3420C and the base plate portion 3411C are joined to the first journal 3521C and the second journal 3522C, respectively. Therefore, the circling movement of the crankshaft 3520C is converted into rotary movement of the end plate 3420C and the base plate portion 3411C about the output axis 3C1. The phase difference in the circling movement between the oscillating gears 3610C, 3620C is determined by a difference in eccentricity direction between the first eccentric portion 3523C and the second eccentric portion 3524C.

On the other hand, when the carrier 3400C is fixed, the oscillating gears 3610C, 3620C are meshed with the plurality of internal tooth pins 3320 of the outer tube 3300. Therefore, the oscillatory rotation of the oscillating gears 3610C, 3620C is converted into the rotary movement of the outer tube 3300 about the output axis 3C1. The input gear 3730C extends along the output axis 3C1 through a support wall 3742. The input gear 3730C extends through space 3750 surrounded by the outer wall 3740. The crankshaft 3520C has a through hole 3525 extending along the output axis 3C1. The distal end portion of the input gear 3730C is inserted into the through hole 3525.

A key groove 3732 is formed in the distal end portion of the input gear 3730C. Another key groove 3526 is formed in an inner wall surface of the crankshaft 3520C, which forms the through hole 3525. The key grooves 3732, 3526 extend substantially parallel to the output axis 3C1. A key 3733 is inserted into the key grooves 3732, 3526. As a result, the input gear 3730C is joined to the crankshaft 3520C. When the input gear 3730C rotates about the output axis 3C1, the crankshaft 3520C rotates about the output axis 3C1. As a result, oscillatory rotation of the oscillating gears 3610C, 3620C occurs.

The central through hole 3417C formed through the base plate portion 3411C includes a first hollow portion 3491 and a second hollow portion 3492. The first hollow portion 3491 and the second hollow portion 3492 both have a circular cross section. The first hollow portion 3491 has a smaller cross sectional area than the second hollow portion 3492. The second journal 3522C and the journal bearing 3532C are disposed in the first hollow portion 3491. The outer surface 3416C of the base plate portion 3411C is pressed against a mating member (not shown).

A flange portion 3314 is formed all around the periphery of the casing 3310 and is connected to the outer wall 3740. The outer wall 3740 has flat distal ends 3740a. The distal ends 3740a of the outer wall 3740 have internally threaded portions 250 as mounting-fastening portions 150. The flange portion 3314 is disposed on the outer periphery of the casing 3310 and has through holes 3315 extending through the flange portion 3314 in the direction along the axis 3C1. The through holes 3315 are arranged at intervals in the circumferential direction. The through holes 3315 are fastening holes penetrated by bolts 151 for fastening the eccentric oscillation gear device 3000 to the outer wall 3740 that forms a part of the robot R. The through holes 3315 are penetrated by the bolts 151 as fastening members. The internally threaded portion 250 of the outer wall 3740 and the bolt 151 constitute the mounting-fastening portion 150.

### Mounting-fastening Portion

The mounting-fastening portion 150 is configured similarly to the fastening portion 100 in the first embodiment shown in Figs. 3 and 4. The bolt 151 and the internally threaded portion 250 in the mounting-fastening portion 150 correspond to the bolt 101 and the internally threaded portion 200 in the fastening portion 100 in the first embodiment shown in Figs. 3 and 4. Therefore, in Fig. 5, these members are denoted by the reference signs 150, 151, and 250, and other members are denoted by the same reference signs as in the fastening portion 100 in the first embodiment shown in Figs. 3 and 4 and are not described here.

As with the fastening portion 100 in the first embodiment shown in Figs. 3 and 4, the mounting-fastening portion 150 includes the elasticity portion (mounting-elasticity portion) 120 and the elasticity portion (mounting-elasticity portion) 220 for deforming the threads 110, 210. Further, a larger contact area can be obtained in the fastening between the eccentric oscillation gear device 3000 and the outer wall 3740 forming a part of the robot R, reducing the variation of the frictional force.

In the embodiment, the fastening between the shaft portion 3412C and the end plate 3420C causes the threads 110, 210 of the externally threaded portion 103 of the bolt (fastener) 101 and the internally threaded portion 200 of the shaft portion 3412C to be contacted with each other. Thus, the threads 110, 210 are deformed elastically with the elasticity portions 120, 220. In this manner, it is possible to reduce the variation of the frictional force between the contact surfaces of the threads 110, 210 in the fastening portion 100. Therefore, the axial tension between the shaft portion 3412C and the end plate 3420C can be stabilized, and the main bearings 3710C, 3720C can be evenly preloaded.

In addition, the first journal 3521C and the second journal 3522C used for the crankshaft assembly 3500C can also be preloaded evenly. This improves the rotational stability of the eccentric oscillation gear device 3000 and increases the torque density. At the same time, the thread 210 of the internally threaded portion 200 provided in the shaft portion 3412C can be elastically deformed with the elasticity portion 220 in a positive manner. Therefore, in the fastening portion 100, it is possible to increase the contact area between the thread 110 of the externally threaded portion 103 and the thread 210 of the internally threaded portion 200, thereby stabilizing the axial tension.

In the fastening portion 100, it is possible to reduce the variation of the frictional force between the contact surfaces of the bolt 101 and the shaft portion 3412C, thereby stabilizing the axial tension between the shaft portion 3412C and the end plate 3420C. Thus, the main bearings 3710C, 3720C can be preloaded evenly. In addition, the hardness of the internally threaded portion 200 of the end plate 3420C can be lower than that of the bolt 101, such that the thread 210 of the internally threaded portion 200 can be elastically deformed with the elasticity portion 120, 220 in a positive manner. Therefore, it is possible to increase the contact area between the thread 110 of the bolt 101 and the thread 210 provided in the end plate 3420C, thereby stabilizing the axial tension.

In this embodiment, the fastening portion 100 and the mounting-fastening portion 150 stabilize the axial tension of the shaft portion 3412C. Therefore, the mounting-fastening portion 150 stabilizes the rigidity of the eccentric oscillation gear device 3000 when it is subjected to the moments, and the positional and trajectory accuracy of the robot R is stabilized at a high level.

Accordingly, this embodiment produces the same advantageous effects as the first embodiment.

### <Third Embodiment>

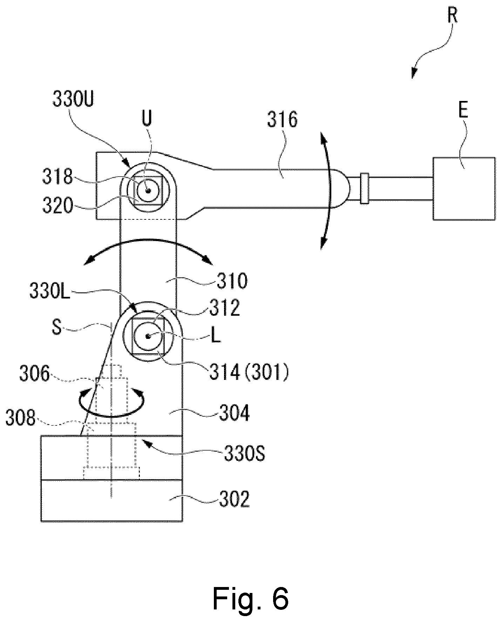

The following describes a robot relating to a third embodiment of the invention with reference to the accompanying drawings. Fig. 6 schematically illustrates the robot relating to the embodiment. This embodiment is different from the first and second embodiments in terms of the robot to which the eccentric oscillation gear device is mounted. The other constituents, which correspond to those in the first and second embodiments, are denoted by the same reference signs and are not described here.

### Robot (Mating Member)

As shown in Fig. 6, the robot R is preferably an industrial robot, and more preferably, it is a cooperation robot. In the field of factory automation (FA) and the like, a cooperation robot refers to "a robot cooperating with workers." The robot R may be an articulated robot having a plurality of eccentric oscillation gear devices (speed reducers, transmissions) corresponding to the eccentric oscillation gear device 1 or the eccentric oscillation gear device 3000.

### Eccentric Oscillation Gear Device

The eccentric oscillation gear devices 1 or the eccentric oscillation gear devices 3000 are provided at coupling portions 330L, 330U (joint portions of the robot R) between a pair of arms that are rotatably coupled, and at a coupling portion 330S. Each of the eccentric oscillation gear devices 1 or the eccentric oscillation gear devices 3000 decelerates a motor torque inputted thereto from a motor serving as a drive source (not shown) and outputs the decelerated torque. The configuration of the eccentric oscillation gear device 1 or the eccentric oscillation gear device 3000 described above is not limitative. The eccentric oscillation gear device 1 or the eccentric oscillation gear device 3000 may have any configuration that can change the speed of the rotation of the drive source that generates a rotational force. For example, the eccentric oscillation gear device 1 or the eccentric oscillation gear device 3000 may be replaced with a speed-increasing gear for accelerating the rotation of the drive source that generates a rotational force and outputting the accelerated rotation. Therefore, in the embodiment, the speed reducer and the transmission are also referred to as the eccentric oscillation gear device.

The robot R includes a plurality of transmissions (the first transmission 308, the second transmission 314, and the third transmission 320) provided at the coupling portions 330S, 330L, 330U, respectively. These transmissions 308, 314, 320 all have fastening portions 100 and are mounted by mounting-fastening portions 150. The transmissions 308, 314, 320 corresponding to the eccentric oscillation gear devices 1, 3000 form a part of the robot R.

The robot R includes: a fixed base 302 contacting with an installation surface; a rotating head 304 extending upward from the fixed base 302; a plurality of arms (a first arm 310 and a second arm 316) rotatably assembled to the rotating head 304, an end effector E provided on the distal end of the arms; and a plurality of transmissions (a first transmission 308, a second transmission 314, and a third transmission 320). The first arm 310 is rotatably coupled to the rotating head 304 via the plurality of transmissions 308, 314. The second arm 316 is rotatably coupled to the first arm 310 via the transmission 320. Each of the transmissions 308, 314, 320 may be any one of the eccentric oscillation gear device 1 and the eccentric oscillation gear device 3000 described above, or may be any combination of the eccentric oscillation gear device 1 and the eccentric oscillation gear device 3000. The following gives the details.

The rotating head 304 is assembled onto the fixed base 302 so as to be rotatable about S axis. The rotating head 304 rotates about S axis via a first servo motor 306 as a drive source and the first transmission 308. The first arm 310 is assembled to the upper portion of the rotating head 304 so as to be swingable in the front-rear direction about L axis. The first arm 310 swings in the front-rear direction about L axis via a second servo motor 312 as a drive source and the second transmission 314. The second arm 316 is assembled to the upper portion of the first arm 310 so as to be swingable in the top-bottom direction about U axis. The second arm 316 swings in the top-bottom direction about U axis via a third servo motor 318 as a drive source and the third transmission 320. With this configuration, the end effector E can be driven three-dimensionally.

In this embodiment, the fastening portion 100 stabilizes the axial tensions of the shaft portions 44, 3412C. In addition, the eccentric oscillation gear devices 1, 3000 have mounting-fastening portion 150 which stabilizes the rigidity when subjected to the moments. Therefore, the positional and trajectory accuracy of the robot R is further stabilized at a high level.

In this embodiment, the member including the coupling portions 330L, 330U to which the eccentric oscillation gear devices 1, 3000 are mounted is the robot R, but this is not limitative. For example, the eccentric oscillation gear devices 1, 3000 may be mounted to a given industrial machine. Even in this case, the main bearings 6, 3710C, 3720C can be preloaded evenly, increasing the probability that the industrial machine itself will fulfill its rated service life. The axial tension of the mounting-fastening portion 150 between the industrial machine and the eccentric oscillation gear device 1, 3000 is stabilized, further increasing the probability that the industrial machine itself will fulfill its rated service life.

Examples of the industrial machine in this embodiment include a positioner and an automatic guided vehicle (AGV).

The following describes other examples of the embodiment of the eccentric oscillation gear device according to the invention.

### Other Examples

In the fastening portion 100 in the above embodiments, the elasticity portions 120, 220 are provided in the roots 110b, 210b at the feet of the threads 110, 210, but this configuration is not limitative. For another example, the elasticity portions 120, 220 may be formed between the crests 110a, 210a and the roots 110b, 210b of the threads 110, 210. In other words, the cavities of the elasticity portions 120, 220 corresponding to the pushing root surfaces 115, 205 may be formed in portions of the threads 110, 210 proximate to the crests 110a, 210a rather than in the roots 110b, 210b.

In this example, the threads 110, 210 that deform elastically have the elasticity portions 120, 220 provided at positions proximate to the crests 110a, 210a. Therefore, compared to the pushing flank surfaces 111, 201 in the above embodiment, the pushing flank surfaces in this example have a smaller dimension in the radial direction of the axis C5. Therefore, the threads 110, 210 near the roots 110b, 210b are less susceptible to elastic deformation and more rigid than in the above embodiments.

As in the above embodiments, it is also possible in this example that only the externally threaded portion 103 has the elasticity portion 120, only the internally threaded portion 200 has the elasticity portion 220, or both the externally threaded portion 103 and the internally threaded portion 200 have the elasticity portions 120, 220. Further, the positions of the elasticity portions 120, 220 may be different for the externally threaded portion 103 and the internally threaded portion 200. Specifically, the distance between the elasticity portions 120, 220 and the roots 110b, 210b in the radial direction of the axis C5 may be different for the externally threaded portion 103 and the internally threaded portion 200.

Further, in this example, or in the above embodiments, the radial dimensions of the elasticity portions 120, 220 formed as cavities, or the opening dimensions of the elasticity portions 120, 220 in the height direction of the threads 110, 210 may be different for the externally threaded portion 103 and the internally threaded portion 200. Likewise, the axial dimensions of the elasticity portions 120, 220 formed as cavities, or the depths of the elasticity portions 120, 220 in the thickness direction of the threads 110, 210 along the first or second direction may be different for the externally threaded portion 103 and the internally threaded portion 200.

### Modification Example

Further, a modification example may be provided, in which the opening widths of the elasticity portions 120, 220 in the radial direction are smaller, and the depths of the elasticity portions 120, 220 in the direction along the axis C5 are larger, than the heights of the threads 110, 210, such that the elasticity portions 120, 220 are shaped like grooves. In this case, the depths of the elasticity portions 120, 220 shaped like grooves can be varied depending on whether the depths of the grooves are oriented in the direction along the axis C5 or the radial direction of the axis C5.

For example, the elasticity portions 120, 220 shaped like grooves may extend along the pushing flank surfaces 111, 201 toward the crests 110a, 210a. In this case, for example, the elasticity portions 120, 220 shaped like grooves may be inclined toward the back flank surfaces 112, 202 away from the crests 110a, 210a, rather than extend parallel with the pushing flank surfaces 111, 201 toward the crests 110a, 210a.

In this case, with the elasticity portions 120, 220 shaped like grooves, the surfaces of the pushing flank surfaces 111, 201 positioned closer to the crests 110a, 210a than are the openings of the elasticity portions 120, 220 can be formed like thin-walled portions that rise from the threads 110, 210. The depths of the elasticity portions 120, 220 shaped like grooves are preferably such that they do not reach the imaginary lines 110C, 210C.

Further, the openings of the elasticity portions 120, 220 shaped like grooves may be formed at positions closer to the crests 110a, 210a of the threads 110, 210 than to the roots 110b, 210b. In this case, the pushing flank surfaces 111, 201 positioned closer to the crests 110a, 210a than are the openings of the elasticity portions 120, 220 may be inclined more than the pushing flank surfaces 111, 201 positioned closer to the roots 110b, 210b than are the openings of the elasticity portions 120, 220.

In this case, the flank angle θ2 for the portion of the pushing flank surfaces 111, 201 positioned closer to the crests 110a, 210a than are the openings of the elasticity portions 120, 220 is larger than the flank angle θ2 for the portion of the pushing flank surfaces 111, 201 positioned at the roots 110b, 210b. In addition, the angle of the elasticity portions 120, 220 shaped like grooves extending from the openings toward the interior is even larger than the flank angle θ2 for the portion of the pushing flank surfaces 111, 201 positioned closer to the crests 110a, 210a.

In this configuration, the fastening portion 100 is a narrow but long groove. In this modification example, the elasticity portions 120, 220 shaped like grooves can be formed symmetrically with respect to the imaginary lines 110C, 210C. In other words, the grooves corresponding to the elasticity portions 120, 220 shaped like grooves may be formed in the back flank surfaces 112, 202 in the same manner.

### Tightening in Modification Example

The following describes tightening of the fastening portion 100 in the modification example. In this modification example, when the bolt 101 is tightened into the internally threaded portion 200, the pushing flank surface 111 of the thread 110 of the externally threaded portion 103 presses the pushing flank surface 201 of the thread 210 of the internally threaded portion 200.

At this time, in the internally threaded portion 200, the elasticity portion 220 disposed between the crest 210a and the root 210b of the thread 210 forms a thin space in a groove-like shape that extends inside the pushing flank surface 201 along the pushing flank surface 201. Therefore, when the force from the bolt 101 is to cause deformation of the thread 210 toward the bearing surface 105 of the bolt 101 (the right side of the drawing), the elasticity portion 220 shaped like a groove collapses. Accordingly, the space in the thread 210 is deformed to shrink, and the pushing flank surface 201 is elastically deformed to be pressed toward the imaginary line 210C.

Then, the elasticity portion 220 shaped like a groove collapses during tightening, and the pushing flank surface 201 extending from the root 210b to the crest 210a becomes planar and is contacted and pressed by the pushing flank surface 111.

Likewise, in the externally threaded portion 103, the elasticity portion 120 disposed between the crest 110a and the root 110b of the thread 110 forms a thin space in a groove-like shape that extends inside the pushing flank surface 111 along the pushing flank surface 111. Therefore, when the force from the internally threaded portion 200 is to cause deformation of the thread 110 toward the opposite side to the bearing surface 105 of the internally threaded portion 200 (the left side of the drawing), the elasticity portion 120 shaped like a groove collapses. Accordingly, the space in the thread 110 is deformed to shrink, and the pushing flank surface 111 shaped like a thin plate is elastically deformed to be pressed toward the imaginary line 110C.

Then, the elasticity portion 120 shaped like a groove collapses during tightening, and the pushing flank surface 111 extending from the root 110b to the crest 110a becomes planar and is contacted and pressed by the pushing flank surface 201.

The elastic deformation of the threads 110, 210 caused by the elasticity portions 120, 220 can produce strong reaction forces. Therefore, a high frictional force can be applied between the pushing flank surface 201 and the pushing flank surface 111. The elastic deformation of the threads 110, 210 caused by the elasticity portions 120, 220 can produce strong reaction forces. Therefore, the contact area can be larger between the pushing flank surface 201 and the pushing flank surface 111.

Accordingly, as with the above embodiments, this modification example is configured such that the fastening between the first carrier (shaft) 41 and the second carrier (hold) 42 causes the threads 110, 210 of the externally threaded portion 103 of the bolt (fastener) 101 and the internally threaded portion 200 of the pillar 44 to be contacted with each other and deformed elastically with the elasticity portions 120, 220. In this manner, it is possible to reduce the variation of the frictional force between the contact surfaces of the threads 110, 210 in the fastening portion 100. Therefore, the axial tension between the first carrier 41 and the second carrier 42 can be stabilized, and the main bearings 6 can be evenly preloaded around the axis C1.

The same tightening torque can be applied to the plurality of fastening portions 100, and the variation of axial tensions in the plurality of fastening portions 100 around the axis C1 during tightening can be reduced. This allows the upper limit of the variation of the axial tension to be maintained below the bolt yield point. As a result, the torque density for increasing the axial tension can be increased.

In the examples described above as the embodiments and the like, the fastening portion 100 and the mounting-fastening portion 150 are applied to the eccentric oscillation gear devices 1, 3000. It is also possible to apply them to eccentric oscillation gear devices having different configurations. For example, the fastening portion 100 and the mounting-fastening portion 150 can be applied to an eccentric oscillation gear device including planetary gears.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

### EXAMPLES

The following describes a confirmation test for this invention.

### <Example Experiment 1>

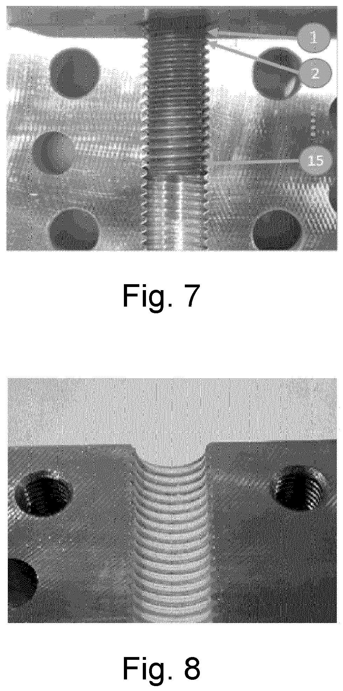

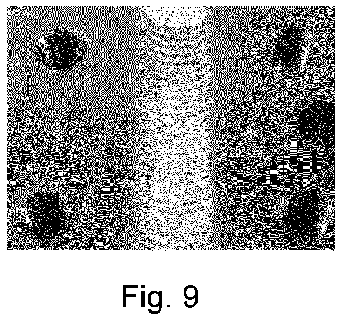

As Example Experiment 1, a fastening test on the fastening portion 100 was conducted using the eccentric oscillation gear device (transmission) 1 of the first embodiment shown in Figs. 1 to 4. Fig. 7 is an image of an internally threaded portion showing the engaging condition of the fastening portion as Example Experiment 1 of the invention. Fig. 8 is an image of an internally threaded portion showing the engaging condition of the fastening portion as Example Experiment 1 of the invention. Fig. 9 is an image of an internally threaded portion showing the engaging condition of the fastening portion as Example Experiment 2 of the invention.

In this confirmation test, a bolt 101 and a test piece corresponding to the fastening portion 100 of the eccentric oscillation gear device 1 were used to measure the number of engaging threads. Specifically, the test piece prepared had an internally threaded portion 200 corresponding to the fastening portion 100 and was divided into halves along the axis C5 of the internally threaded portion 200. Subsequently, a developer used for flaw detection tests was applied to all threads 210 that form the inner circumferential surface of the internally threaded portion 200. The halves of the test piece were put together as they were before the test piece was divided, thereby returning the internally threaded portion 200 to its original shape. The bolt 101 prepared had the elasticity portions 120 and had the pushing flank surfaces 111 and the back flank surfaces 112 both inclined with respect to the imaginary lines 110C.

The bolt 101 was tightened into the internally threaded portion 200 of the test piece to a predetermined tightening torque. The test piece was then disassembled to expose the inner circumferential surface of the internally threaded portion 200. In this state, the engaging condition at the inner circumferential surface of the internally threaded portion 200 was observed. The engaging condition indicates whether or not the pushing flank surfaces 201 and the pushing flank surfaces 111 contact with each other. In this confirmation test, the index of the engaging condition is the number of threads 210 in the actual engaging area (the area where the pushing flank surfaces 201 and the pushing flank surfaces 111 contact with each other).

Below are the specifications of the test piece, the bolt 101, and the tightening test.
- Size of the bolt 101: M12
- Basic dimension (nominal diameter) of the major diameter of the externally threaded portion 103: 12 [mm]
- Basic dimension of the pitch diameter of the externally threaded portion 103: 10.863 [mm]
- Basic dimension of the root diameter of the externally threaded portion 103: 10.106 [mm]
- Angle θ1 of the threads of the externally threaded portion 103: 63.5 °
- Flank angle θ2 of the externally threaded portion 103: 30.5°
- Flank angle θ3 of the externally threaded portion 103: 33°.
- Material of the externally threaded portion 103: SCM435
- Pitch: 1.75 [mm].

- Basic dimension (nominal diameter) of the root diameter of the internally threaded portion 200: 12 [mm]
- Basic dimension of the pitch diameter of the internally threaded portion 200: 10.863 [mm]
- Basic dimension of the minor diameter of the internally threaded portion 200: 10.106 [mm]
- Height of the fundamental triangle of the internally threaded portion 200: 1.516 [mm]
- Angle θ1 of the threads of the internally threaded portion 200: 62°
- Flank angle θ2 of the internally threaded portion 200: 31 °
- Flank angle θ3 of the internally threaded portion 200: 31 °.
- Material of the internally threaded portion 200: S50C
- Pitch: 1.75 [mm].

### Test Conditions

- Same tightening torque for Example Experiment 1 and Example Experiment 2: 102 [N·m].
- Developer: Developer (white) specified in JIS Z 2343-1_2017
- Number of tests for each of Example Experiment 1 and Example Experiment 2: N4 (four tests)

The results are shown in Figs. 7 to 8. Figs. 7 and 8 show the internally threaded portion of the test piece viewed from different angles. The numbers shown in Fig. 7 indicate the numbers of threads 210 counted from the opening position of the internally threaded portion 200.

As shown in Figs. 7 to 8, the area of the inner circumferential surface of the internally threaded portion 200 that visually appears white because of the presence of the developer is defined as an area where the pushing flank surfaces 111, 201 do not contact with each other. In contrast, the area of the inner circumferential surface of the internally threaded portion 200 that no longer visually appears white because of the absence of the developer is defined as an area where the pushing flank surfaces 201 and the pushing flank surfaces 111 contact with each other. Therefore, the area of the inner circumferential surface of the internally threaded portion 200 that no longer visually appears white because of the absence of the developer corresponds to the engaging area.

In Example Experiment 1, the experiment was conducted on several internally threaded portions 200. As a result, as shown in Figs. 7 to 8, the numbers of threads 210 in the engaging areas in Example Experiment 1 were 15, 15, 14, and 15. Therefore, the engaging areas within the plurality of threads 210 range over the above numbers of threads 210 in the inner circumferential surface extending from the opening of the internally threaded portion 200 along the axis C5. As for the bolt 101 inserted into the internally threaded portion 200, the engaging areas range over a plurality of threads 110 on the shaft 102 arranged continuously from the head 104 along the axis C5. The engaging areas are close to the head 104 of the bolt 101, except for the incomplete threads.

### <Example Experiment 2>

As Example Experiment 2, the same tests as for Example Experiment 1 were conducted using a bolt without the elasticity portions 120 for comparison.

In Example Experiment 2, the experiment was also conducted on several internally threaded portions 200. The results are shown in Fig. 9. As shown in Fig. 9, the numbers of threads in the engaging areas in Example Experiment 2 were 6, 6, 7, and 6.

These results actually confirmed that the number of threads in the engaging area in Example Experiment 1 is two or more times as large as in Example Experiment 2 without elasticity portions. In other words, it was confirmed that the number of threads in the engaging area in Example Experiment 1 increased because of the presence of the elasticity portions 120, and the engaging condition was improved compared to that in Example Experiment 2.

The number of threads in the engaging area indicates the contact between the flank surfaces of the internally threaded portion and the flank surfaces of the bolt. Therefore, it was confirmed that the contact area in the fastening portion was increased. In other words, it was confirmed that the presence of the elasticity portions 120 caused the elastic deformation of the entire threads and resultant increase of the contact area.

Thus, according to the present invention, it was confirmed that the number of threads of the externally threaded portion and the internally threaded portion engaging with each other is two or more times as large as in the case where no elasticity portions are present. Further, according to the present invention, it was confirmed the number of threads of the externally threaded portion and the internally threaded portion engaging with each other is 14 or larger.

These features make it possible that, in the case where a plurality of fastening portions are provided as in the eccentric oscillation gear device of the invention, the upper limit of the variation of the axial tensions is maintained below the bolt yield point. As a result, according to the invention, the torque density for increasing the axial tension can be increased.

In the above example experiment, the bolt 101 had the elasticity portions 120 and had the pushing flank surfaces 111 and the back flank surfaces 112 both inclined with respect to the imaginary lines 110C, but this condition is not limitative. For example, a test piece corresponding to the internally threaded portion 200, which has the elasticity portions 220 and has the pushing flank surfaces 201 and the back flank surfaces 202 both inclined with respect to the imaginary line 210C, could be used to obtain the same results.

### LIST OF REFERENCE NUMBERS

- 1: eccentric oscillation gear device (speed reducer)
- 2: outer tube (casing)
- 4: carrier
- 6A: first bearing (main bearing)
- 6B: second bearing (main bearing)
- 10A: crankshaft (eccentric member)
- 41: first carrier (first member; shaft)
- 42: second carrier (second member; hold)
- 44: pillar (shaft portion)
- 100: fastening portion
- 101, 151: bolt (fastener)
- 103: externally threaded portion
- 105: bearing surface
- 110, 210: thread
- 110b, 210b: root
- 110C, 210C: imaginary line
- 111, 201: pushing flank surface (inclined surface)
- 112, 202: back flank surface
- 115, 205: pushing root surface
- 116, 206: back root surface
- 120,220: elasticity portion
- 150: mounting-fastening portion
- 200, 250: internally threaded portion
- R: robot
- 330L, 330U, 330S: coupling portion

## Claims

1. An eccentric oscillation gear device (1), comprising:
a casing (2);
a first member (41) supported by the casing (2) via a first bearing (6A);
a second member (42) supported by the casing (2) via a second bearing (6B); and
a fastening portion (100) fastening the first member (41) and the second member (42) to each other in an axial direction of the casing (2),
wherein the fastening portion (100) includes an externally threaded portion (103) and an internally threaded portion (200), and
wherein at least one selected from the group consisting of feet of threads (110) of the externally threaded portion (103) and roots (210b) of threads (210) of the internally threaded portion (200) has elasticity portions (120, 220) for facilitating elastic deformation of the threads (110, 210) associated with the elasticity portions (120, 220) when the externally threaded portion (103) and the internally threaded portion (200) are tightened to each other.

2. The eccentric oscillation gear device (1) of claim 1,
wherein only the externally threaded portion (103) has the elasticity portions (120), and
wherein the externally threaded portion (103) having the elasticity portions (120) has a higher hardness than the internally threaded portion (200) not having the elasticity portions (220).

3. The eccentric oscillation gear device (1) of claim 1,
wherein only the internally threaded portion (200) has the elasticity portions (220), and
wherein the externally threaded portion (103) not having the elasticity portions (120) has a lower hardness than the internally threaded portion (200) having the elasticity portions (220).

4. The eccentric oscillation gear device (1) of claim 1, wherein each of the elasticity portions (120, 220) has a concave shape formed in an inclined surface of associated one of the threads (110, 210).

5. The eccentric oscillation gear device (1) of claim 1,
wherein at least the externally threaded portion (103) has the elasticity portions (120), and
wherein in the fastening portion (100) before tightening, a shape of the threads (110) having the elasticity portions (120) is inclined from the feet of the threads (110) toward crests (110a) of the threads (110) in such a direction that the first member (41) and the second member (42) come close to each other along the axial direction during tightening.

6. The eccentric oscillation gear device (1) of claim 1, wherein a number of threads (110, 210) of the externally threaded portion (103) and the internally threaded portion (200) engaging with each other is two or more times as large as in a case where no elasticity portions (120, 220) are provided.

7. The eccentric oscillation gear device (1) of claim 6, wherein the number of threads (110, 210) of the externally threaded portion (103) and the internally threaded portion (200) engaging with each other is 14 or larger.

8. An eccentric oscillation gear device (1), comprising:
a casing (2);
an internally toothed gear (3) provided on an inner periphery of the casing (2);
an externally toothed gear (14, 16) meshing with the internally toothed gear (3);
an eccentric member (10A) for oscillating the externally toothed gear (14, 16);
a first member (41) supported by the casing (2) via a first bearing (6A);
a second member (42) supported by the casing (2) via a second bearing (6B); and
a fastening portion (100) fastening the first member (41) and the second member (42) to each other in an axial direction of the casing (2),
wherein the fastening portion (100) includes an externally threaded portion (103) and an internally threaded portion (200), and
wherein at least one selected from the group consisting of feet of threads (110) of the externally threaded portion (103) and roots (210b) of threads (210) of the internally threaded portion (200) has elasticity portions (120, 220) for facilitating elastic deformation of the threads (110, 210) associated with the elasticity portions (120, 220) when the externally threaded portion (103) and the internally threaded portion (200) are tightened to each other.

9. A robot (R), comprising:
a plurality of members including a movably connected arm (310, 316);
a coupling portion (330L, 330U, 330S) rotatably coupling the plurality of members including the arm (310, 316); and
an eccentric oscillation gear device (1, 3000) mounted to the coupling portion (330L, 330U, 330S),
wherein the eccentric oscillation gear device (1, 3000) includes:
a casing (2);
a first member (41) supported by the casing (2) via a first bearing (6A);
a second member (42) supported by the casing (2) via a second bearing (6B); and
a fastening portion (100) fastening the first member (41) and the second member (42) to each other in an axial direction of the casing (2), wherein the fastening portion (100) includes an externally threaded portion (103) and an internally threaded portion (200), and
wherein at least one selected from the group consisting of feet of threads (110) of the externally threaded portion (103) and roots (210b) of threads (210) of the internally threaded portion (200) has elasticity portions (120, 220) for facilitating elastic deformation of the threads (110, 210) associated with the elasticity portions (120, 220) when the externally threaded portion (103) and the internally threaded portion (200) are tightened to each other.

10. The robot (R) of claim 9, further comprising:
a mounting-fastening portion (150) that couples the eccentric oscillation gear device (1, 3000) and the coupling portion (330L, 330U, 330S),
wherein the mounting-fastening portion (150) includes a mounting-externally threaded portion (103) and a mounting-internally threaded portion (250), and
wherein at least one selected from the group consisting of feet of threads (110) of the mounting-externally threaded portion (103) and roots (210b) of threads (210) of the mounting-internally threaded portion (250) has mounting-elasticity portions (120, 220) for facilitating elastic deformation of the threads (110, 210) associated with the elasticity portions (120, 220) when the mounting-externally threaded portion (103) and the mounting-internally threaded portion (250) are tightened to each other.

11. An industrial machine, comprising:
a plurality of members connected to each other;
a coupling portion (330L, 330U, 330S) rotatably coupling the plurality of members; and
an eccentric oscillation gear device (1, 3000) mounted to the coupling portion (330L, 330U, 330S),
wherein the eccentric oscillation gear device (1, 3000) includes:
a casing (2);
a first member (41) supported by the casing (2) via a first bearing (6A);
a second member (42) supported by the casing (2) via a second bearing (6B); and
a fastening portion (100) fastening the first member (41) and the second member (42) to each other in an axial direction of the casing (2), wherein the fastening portion (100) includes an externally threaded portion (103) and an internally threaded portion (200), and
wherein at least one selected from the group consisting of feet of threads (110) of the externally threaded portion (103) and roots (21 Ob) of threads (210) of the internally threaded portion (200) has elasticity portions (120, 220) for facilitating elastic deformation of the threads (110, 210) associated with the elasticity portions (120, 220) when the externally threaded portion (103) and the internally threaded portion (200) are tightened to each other.

12. The industrial machine of claim 11, further comprising:
a mating member (R) using the eccentric oscillation gear device (1, 3000); and
a mounting-fastening portion (150) that couples the eccentric oscillation gear device (1, 3000) and the mating member (R),
wherein the mounting-fastening portion (150) includes a mounting-externally threaded portion (103) and a mounting-internally threaded portion (250), and
wherein at least one selected from the group consisting of feet of threads (110) of the mounting-externally threaded portion (103) and roots (210b) of threads (210) of the mounting-internally threaded portion (250) has mounting-elasticity portions (120, 220) for facilitating elastic deformation of the threads (110, 210) associated with the elasticity portions (120, 220) when the mounting-externally threaded portion (103) and the mounting-internally threaded portion (250) are tightened to each other.
